# EUROPEAN PATENT APPLICATION

(11) **EP 4 717 497 A1**
(43) Date of publication of application: **01.04.2026**
(21) Application number: 25201970.8
(22) Date of filing: 12.09.2025
(51) Int. Cl.: B60L 1/00, B60L 53/66, B60L 55/00

(54) **CONTROL DEVICE**

(30) Priority: 26.09.2024 JP 2024167236
(71) Applicant: TOYOTA JIDOSHA KABUSHIKI KAISHA, Toyota-shi, Aichi-ken 471-8571 (JP)
(72) Inventor: CHIBA, Ryoichi, TOYOTA-SHI, AICHI-KEN, 471-8571 (JP)
(74) Representative: Cabinet Beau de Loménie

(57) **Abstract**

A control device (30) controls a battery (23) installed in a vehicle. The control device is configured to acquire charge-discharge requests for the battery from a plurality of devices, evaluate the acquired charge-discharge requests based on the devices from which the charge-discharge requests originated, and output a control signal in response to a control request, in which the control signal controls the battery, and the control request indicates a result of the evaluation.

## Description

This application is based upon and claims the benefit of priority from Japanese Patent Application No. 2024-167236, filed on September 26, 2024, the entire contents of which are incorporated herein by reference and to which the skilled-person may refer when considering the present disclosure.

### BACKGROUND

### 1. Field

The following description relates to a control device.

### 2. Description of Related Art

JP2012-110122A discloses a control device that controls a battery installed in a vehicle. The control device acquires a charge request from devices, such as an input device installed in the vehicle or a mobile device. When the control device acquires a plurality of charge requests, the control device controls the battery in response to the charge request acquired last.

In a control device such as that of the above disclosure, when acquiring a plurality of charge requests, the control device controls the battery in response to the charge request acquired last. Thus, the control device may control the battery in a manner differing from the charge request sent from a device intended by a user of the vehicle. Further, this is not limited to the charge request. The same problem may occur when the control device acquires a discharge request.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a control device is configured to control a battery installed in a vehicle. The control device comprises an acquisition portion, a rule-evaluating portion and an output portion. The acquisition portion is configured to acquire charge-discharge requests for the battery from two or more devices among a plurality of devices. The rule-evaluating portion is configured to evaluate the charge-discharge requests acquired by the acquisition portion based on the devices from which the charge-discharge requests originated. The output portion is configured to output a control signal in response to a control request, in which the control signal controls the battery, and the control request indicates a result of the evaluation conducted by the rule-evaluating portion.

Other features and aspects will be apparent from the following detailed description, the drawings, and the claims.

### BRIEF DESCRIPTION OF THE DRAWINGS

Fig. 1 is a schematic diagram illustrating a charge-discharge system.
Fig. 2 is a diagram illustrating a first example of a charge-discharge request.
Fig. 3 is a diagram illustrating a second example of the charge-discharge request.
Fig. 4 is a diagram illustrating a control device.
Fig. 5 is a chart illustrating evaluating rule associated with a vehicle mode.
Fig. 6 is a chart illustrating evaluating rule associated with the vehicle mode.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

An embodiment of a control device will now be described with reference to the drawings.

### Overview of Charge-Discharge System

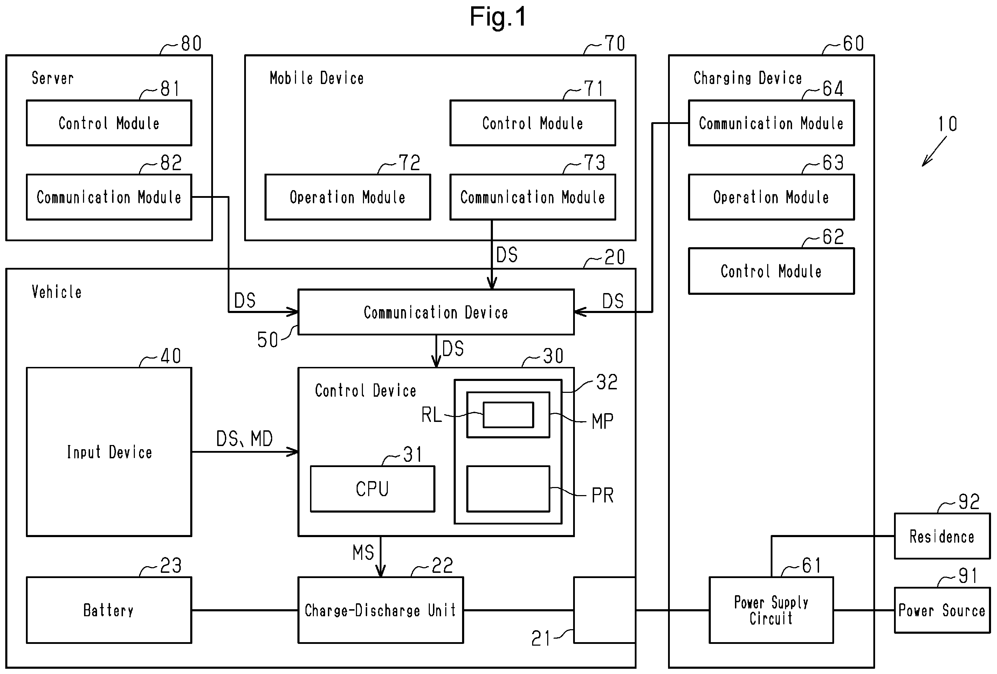

As shown in Fig. 1, a charge-discharge system 10 includes a vehicle 20, a charging device 60, a mobile device 70, and a server 80. The charge-discharge system 10 controls a battery 23 installed in the vehicle 20 which is an electric vehicle.

The vehicle 20 includes a connection port 21, a charge-discharge unit 22, and the battery 23. The connection port 21 is configured to be connected to a connector of a power supply cable extending from the charging device 60. When the connector is connected to the connection port 21, the battery 23 is in a state allowing for charging and discharging.

The battery 23 stores electric power for driving a motor (not shown), which is a drive source of the vehicle 20. The charge-discharge unit 22 is located in a power line connecting the connection port 21 and the battery 23. The charge-discharge unit 22 includes a power converter and a relay that switches the power line connecting the connection port 21 and the battery 23 between an open state and a closed state. The charge-discharge unit 22 is configured to charge the battery 23 with electric power from the charging device 60 and discharge electric power from the battery 23 to the charging device 60.

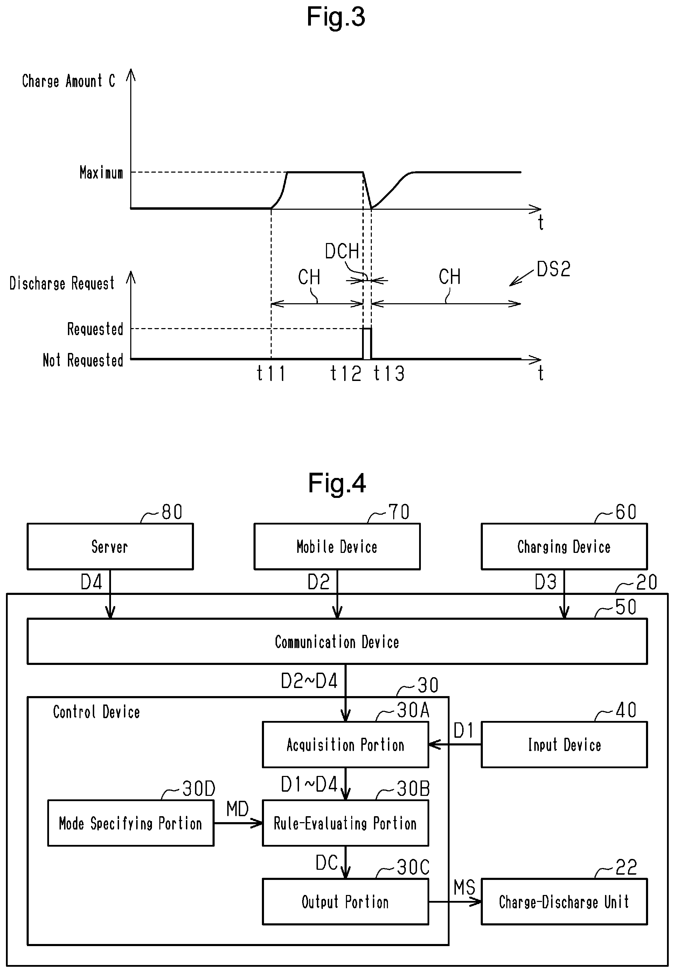

The vehicle 20 includes a control device 30, an input device 40, and a communication device 50. The control device 30 controls the battery 23 by sending a control signal MS to the charge-discharge unit 22. The control device 30 includes a CPU 31, which is a processing circuitry, and memory 32. The memory 32 stores an evaluating map MP, which includes evaluating rules RL, and an evaluating program PR. When the CPU 31 executes the evaluating program PR and refers to the evaluating rules RL, the control device 30 implements the functionalities of an acquisition portion 30A, a rule-evaluating portion 30B, an output portion 30C, and a mode specifying portion 30D as shown in Fig. 4. The control device 30 will be described in detail later.

As shown in Fig. 1, the input device 40 inputs information, which is entered by the user of the vehicle 20, to the control device 30. The input device 40 is, for example, a touchscreen. The input device 40 inputs information indicating a vehicle mode MD, which is related to the charging and discharging of the vehicle 20, to the control device 30. The input device 40 inputs a charge-discharge request DS related to the charging and discharging of the vehicle 20 to the control device 30.

A communication device 50 communicates with the charging device 60, the mobile device 70, and the server 80 through a wireless communication network. The communication device 50 inputs information acquired from these devices to the control device 30.

The charging device 60 includes a power supply circuit 61, a control module 62, an operation module 63, and a communication module 64. The charging device 60 is electric vehicle supply equipment (EVSE). The power supply circuit 61 is connected to the end of the power supply cable that is opposite to the end connected to the connector. The power supply circuit 61 is connected to an external power source 91. The power supply circuit 61 can supply the electric power from the power source 91 to the vehicle 20 via the power supply cable. The power supply circuit 61 is connected to a residence 92. The power supply circuit 61 can supply the electric power from the vehicle 20 to the residence 92.

An operation module 63 receives operations by the user of the charging device 60. An example of the operation module 63 is a touchscreen. The communication module 64 communicates with the communication device 50 of the vehicle 20 via the wireless communication network. The control module 62 sends the charge-discharge request DS related to the charging and discharging of the vehicle 20 from the communication module 64 to the vehicle 20 in response to the operating signal received by the operation module 63.

The mobile device 70 includes a control module 71, an operation module 72, and a communication module 73. The operation module 72 is operated by the user of the mobile device 70. The operation module 72 is, for example, a touchscreen. The communication module 73 communicates with the communication device 50 of the vehicle 20 via the wireless communication network. The control module 71 sends the charge-discharge request DS, which is related to the charging and discharging of the vehicle 20, from the communication module 73 to the vehicle 20 in response to an operating signal generated when the operation module 72 is operated.

The server 80 includes a control module 81 and a communication module 82. The communication module 82 communicates with the communication device 50 of the vehicle 20 via the wireless communication network. The control module 81 performs charge-discharge control on the vehicle 20. In the present embodiment, the control module 81 performs charge-discharge control on the vehicle 20 that is an electric vehicle used as a resource of a virtual power plant (VPP). When the control module 81 performs charge-discharge control, the control module 81 sends the charge-discharge request DS, which is related to the charging and discharging of the vehicle 20, to the vehicle 20 from the communication module 82. Further, in the present embodiment, the various devices from which the charge-discharge request DS originates include the input device 40, the charging device 60, the mobile device 70, and the server 80.

### Examples of Charge-Discharge Request

Examples of the charge-discharge request DS sent from each device to the control device 30 will now be described. A first example is a charge-discharge request DS1. A second example is a charge-discharge request DS2.

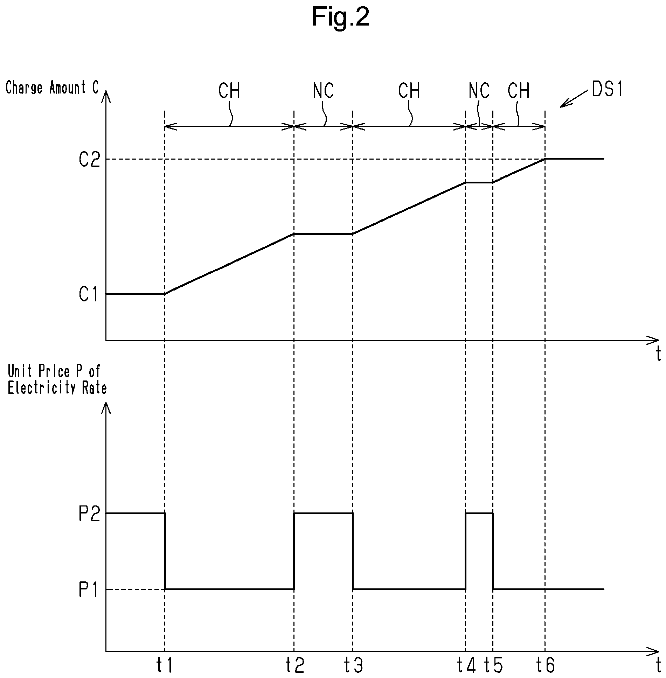

In the first example shown in Fig. 2, the charge-discharge request DS1 is a reservation request that has the charge control started at a predetermined time, namely, at time t1. The charge-discharge request DS1, which is a reservation request, includes a charge request CH.

More specifically, in the first example, from time t1 to time t2, which is after time t1, a unit price P of an electricity rate is a unit price P1. From time t2 to time t3, which is after time t2, the unit price P of the electricity rate is a unit price P2, which is higher than the unit price P1. From time t3 to time t4, which is after time t3, the unit price P of the electricity rate is the unit price P1. From time t4 to time t5, which is after time t4, the unit price P of the electricity rate is the unit price P2. From time t5 to time t6, the unit price P of the electricity rate is the unit price P1.

The charge-discharge request DS1 includes the charge request CH generated from time t1 to time t2, from time t3 to time t4, and from time t5 to time t6. The charge-discharge request DS1 includes a no-charge-discharge request NC from time t2 to time t3 and from time t4 to time t5.

The charge-discharge request DS1 requests charging during time t1 to time t2, time t3 to time t4, and time t5 to time t6. The charge-discharge request DS1 does not request charging and discharging during time t2 to time t3 and time t4 to time t5.

When the battery 23 is charged in response to the charge-discharge request DS1, a charge amount C of the battery 23 increases from a charge amount C1 at time t1 to a charge amount C2 at time t6.

During the term from time t1 to time t6, there is a period in which the charge-discharge request DS1 is generated to request charging and a period where charging is not requested. The charge-discharge request DS1 requests the charging control to be started at time t1. The charge-discharge request DS1 is a reservation request for performing charging control in accordance with the unit price P of the electricity rate.

In the second example as shown in Fig. 3, the charge-discharge request DS2 includes the charge request CH and a discharge request DCH. The charge-discharge request DS2 is a request for starting the discharge control at a predetermined time, namely, at time t11. In other words, the charge-discharge request DS2 is a reservation request.

The charge-discharge request DS2 includes the charge request CH generated from time t11 to time t12, which is after time t11, from time t12 to time t13, which is after time t12, and from time t13 to after time t13.

The charge-discharge request DS2 requests charging at time t11. The charge-discharge request DS2 requests discharging during the period from time t11 to time t12. At time t13, the charge-discharge request DS2 stops requesting discharging, and requests charging.

When the battery 23 is charged in response to the charge-discharge request DS2, the charge amount C of the battery 23 gradually increases from time t11, and charging is continued until time t12. Afterwards, at time t12, discharging of the battery 23 starts, thus the charge amount C of the battery 23 starts to decrease. Then, when at time t13, charging of the battery 23 is started again, and the charge amount C of the battery 23 starts increasing.

In the second example, a large amount of electricity is used at the residence 92 during the period from time t12 to time t13. Thus, the discharge request DCH is reserved for the period from time t12 to time t13. The charge-discharge request DS2 includes the charge request CH generated from time t11 to time t12 and after time t13. The charge-discharge request DS2 is a reservation request for performing charge-discharge control that includes the discharge control performed to compensate for the amount of electricity used by the residence 92.

In this manner, the charge-discharge request DS may include the charge request CH and the discharge request DCH that are generated at predetermined periods. In a further example of the charge-discharge request DS, at a predetermined period, the charge-discharge request DS requests charging to be performed during periods where the calculated emission of the carbon dioxide is the minimum amount, and does not request charging outside this period. In another example of the charge-discharge request DS, the single power source 91 sequentially charges multiple vehicles 20 by charging each vehicle 20 at different periods.

### Function of Control Device According to Evaluating Program

Each functional portion of the charge-discharge system 10 implemented when the CPU 31 executes the evaluating program PR will now be described.

As shown in Fig. 4, the control device 30 includes the acquisition portion 30A, the rule-evaluating portion 30B, the output portion 30C, and the mode specifying portion 30D. Hereafter, to distinguish the charge-discharge requests DS from one another, the charge-discharge request DS sent from the input device 40 will be defined as a first request D1. The charge-discharge DS sent from the mobile device 70 will be defined as a second request D2. The charge-discharge request DS sent from the charging device 60 will be defined as a third request D3. The charge-discharge DS sent from the server 80 will be defined as a fourth request D4. Further, each charge-discharge request DS includes, for example, an ID that identifies the device from which the charge-discharge request DS is originated.

The acquisition portion 30A acquires the charge-discharge request DS of the battery 23 from various devices. More specifically, the acquisition portion 30A acquires the first request D1 from the input device 40. The acquisition portion 30A receives the third request D3 from the charging device 60 via the communication device 50. The acquisition portion 30A receives the second request D2 from the mobile device 70 via the communication device 50. The acquisition portion 30A receives the fourth request D4 from the server 80 via the communication device 50. The acquisition portion 30A outputs the acquired charge-discharge requests DS to the rule-evaluating portion 30B.

The mode specifying portion 30D specifies a vehicle mode MD from a plurality of vehicle modes MD based on information indicating the vehicle mode MD input by the input device 40. Then, the mode specifying portion 30D outputs the information of the specified vehicle mode MD to the rule-evaluating portion 30B.

The rule-evaluating portion 30B evaluates the charge-discharge requests DS acquired by the acquisition portion 30A based on the devices from which the charge-discharge requests DS originated. The rule-evaluating portion 30B refers to the evaluating rule RL. The evaluation of the charge-discharge requests DS will be described in detail later. Further, the rule-evaluating portion 30B outputs a control request DC which is the evaluation result of the charge-discharge requests DS, to the output portion 30C.

The output portion 30C outputs the control signal MS to control the battery 23 in response to the control request DC. For example, in response to the control request DC, the output portion 30C outputs a signal of chronological data indicating start of charging, end of charging, start of discharging, and end of discharging as the control signal MS to the charge-discharge unit 22.

### Evaluation Referring to Evaluating Rule

The evaluation of the charge-discharge request DS by the rule-evaluating portion 30B will now be described. The rule-evaluating portion 30B evaluates the charge-discharge request DS according to the device serving as the source of the charge-discharge request DS and by referencing the evaluating rule RL.

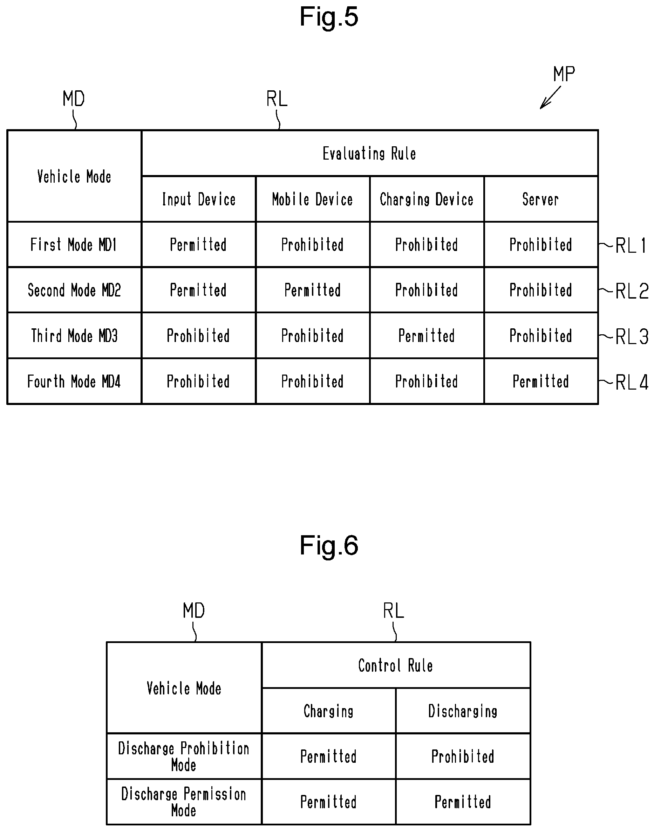

As shown in Fig. 5, the evaluating map MP includes the vehicle modes MD and the evaluating rules RL. The evaluating rules RL are each associated with one of the vehicle modes MD. Among the devices from which the charge-discharge requests DS may have originated, each evaluating rule RL indicates one or more devices of which the selection is prohibited. More specifically, a first vehicle mode MD1 is associated with a first evaluating rule RL1. The first vehicle mode MD1 is a mode prohibiting external control. The first evaluating rule RL1 permits the selection of the charge-discharge request DS originating from the input device 40. Further, the first evaluating rule RL1 prohibits the selection of the charge-discharge requests DS originating from the mobile device 70, the charging device 60, and the server 80.

A second vehicle mode MD2 is associated with a second evaluating rule RL2. The second vehicle mode MD2 is a mode that permits the operations of the input device 40 and the mobile device 70. The second evaluating rule RL2 permits the selection of the charge-discharge requests DS originating from the input device 40 and the mobile device 70. Further, the second evaluating rule RL2 prohibits the selection of the charge-discharge requests DS originating from the charging device 60 and the server 80.

A third vehicle mode MD3 is associated with a third evaluating rule RL3. The third vehicle mode MD3 is a mode that permits the operation of only the charging device 60. The third evaluating rule RL3 permits the selection of the charge-discharge request DS originating from the charging device 60. Further, the third evaluating rule RL3 prohibits the selection of the charge-discharge requests DS originating from the input device 40, the mobile device 70, and the server 80.

A fourth vehicle mode MD4 is associated with a fourth evaluating rule RL4. The fourth vehicle mode MD4 is a mode that permits the operation of only the server 80. The fourth evaluating rule RL4 permits the selection of the charge-discharge request DS sent from the server 80. Further, the fourth evaluating rule RL4 prohibits the selection of the charge-discharge requests DS originating from the input device 40, the charging device 60, and the mobile device 70.

As shown in Fig. 6, each vehicle mode MD is divided into further modes. Each vehicle mode MD includes a discharge prohibition mode and a discharge permission mode. The evaluating rule RL associated with the discharge prohibition mode permits charging and prohibits discharging of the battery 23. The evaluating rule RL associated with the discharge permission mode permits charging and discharging of the battery 23.

Thus, in the present embodiment, the vehicle modes MD include the discharge prohibition mode and the discharge permission mode in the first vehicle mode MD1, and the discharge prohibition mode and the discharge permission mode in the second vehicle mode MD2. The vehicle modes MD include the third vehicle mode MD3 that includes the discharge prohibition mode and the discharge permission mode, and the fourth vehicle mode MD4 that includes the discharge prohibition mode and the discharge permission mode.

As shown in Fig. 4, the rule-evaluating portion 30B refers to the evaluating rule RL associated with the vehicle mode MD based on the information indicating the vehicle mode MD from the mode specifying portion 30D. For example, when the vehicle mode MD specified by the mode specifying portion 30D is the first vehicle mode MD1, the rule-evaluating portion 30B refers to the first evaluating rule RL1 associated with the first vehicle mode MD1.

Then, the rule-evaluating portion 30B selects one of the acquired charge-discharge requests DS in accordance with the evaluating rule RL that is referred to. For example, when the rule-evaluating portion 30B refers to the first evaluating rule RL1, the rule-evaluating portion 30B selects the first request D1 originating from the input device 40.

For example, when the rule-evaluating portion 30B refers to the second evaluating rule RL2, the rule-evaluating portion 30B selects the acquired charge-discharge request DS from the first request D1, originating from the input device 40, and the second request D2, originating from the mobile device 70. When the rule-evaluating portion 30B receives both the first request D1 and the second request D2, the rule-evaluating portion 30B selects the charge-discharge request DS that starts control at an earlier time t.

For example, when the rule-evaluating portion 30B refers to the third evaluating rule RL3, the rule-evaluating portion 30B selects the third request D3 originating from the charging device 60. For example, when the rule-evaluating portion 30B refers to the fourth evaluating rule RL4, the rule-evaluating portion 30B selects the fourth request D4 originating from the server 80.

Subsequently, the rule-evaluating portion 30B determines whether the vehicle mode MD specified by the mode specifying portion 30D is a discharge prohibition mode or a discharge permission mode. For example, when the vehicle mode MD specified by the mode specifying portion 30D is the discharge prohibition mode and the first request D1 selected by the rule-evaluating portion 30B includes the discharge request DCH, the rule-evaluating portion 30B generates the control request DC described below as a result of the evaluation. That is, the rule-evaluating portion 30B generates the control request DC by changing the period of the discharge request DCH to a period of a no-charge-discharge request NC in accordance with the first request D1, which does not request charging and does not request discharging. Further, when the vehicle mode MD specified by the mode specifying portion 30D is a discharge permission mode and the charge-discharge request DS selected by the rule-evaluating portion 30B includes the discharge request DCH, the rule-evaluating portion 30B, as a result of the evaluation, sets the selected charge-discharge request DS as the control request DC.

### Operation and Advantages of Present Embodiment

(1) When, for example, the server 80 outputs the fourth request D4, the user of the vehicle 20 may then operate the input device 40 such that the input device 40 outputs the first request D1. Further, for example, when the user of the vehicle 20 operates the mobile device 70 such that the mobile device 70 outputs the second request D2, which is a reservation request, the user of the vehicle 20 may then operate the charging device 60 such that the charging device 60 outputs the third request D3. In this manner, the control device 30 may acquire a plurality of charge-discharge requests DS.
   In such a case, the rule-evaluating portion 30B refers to the evaluating rule RL and evaluates the charge-discharge requests DS acquired by the acquisition portion 30A in accordance with the device from which the charge-discharge request DS is originated. Further, the output portion 30C outputs the control signal MS, which controls the battery 23, to the charge-discharge unit 22 in accordance with the control request DC, which is the result of the evaluation conducted by the rule-evaluating portion 30B.
   Thus, the control device 30 controls the battery 23 in response to the control request DC, which is the result of the evaluation conducted on the charge-discharge request DS in accordance with the device from which the charge-discharge request DS is originated. In other words, the battery 23 is controlled only by a charge-discharge request DS sent from the device with which the user of the vehicle 20 intended to control the battery 23. Consequently, the control device 30 does not allow the battery 23 to be controlled in response to a charge-discharge request DS sent from a device with which the user of the vehicle 20 did not intend to control the battery 23.
(2) The control device 30 stores the evaluating rules RL. The rule-evaluating portion 30B selects one of the charge-discharge requests DS in accordance with the evaluating rule RL associated with the vehicle mode MD, which is specified by the mode specifying portion 30D. This allows the rule-evaluating portion 30B to give an evaluation result for each vehicle mode MD.
(3) The evaluating rule RL indicates one or more devices prohibited from being selected as the device from which the charge-discharge request DS originated. Thus, the control device 30 prevents the battery 23 from being controlled based on a charge-discharge request DS acquired from a selection-prohibited device.
(4) The vehicle modes MD include the discharge prohibition mode and the discharge permission mode. When the vehicle mode specified by the mode specifying portion 30D is the discharge prohibition mode and the charge-discharge request DS selected by the rule-evaluating portion 30B includes the discharge request DCH, the rule-evaluating portion 30B generates the control request DC that changes a period of the discharge request DCH to a period of the no-charge-discharge request NC period, as the evaluation result of the charge-discharge request DS. Thus, when the control device 30 conducts an evaluation in accordance with the evaluating rule RL associated with the discharge prohibition mode, even if the discharge request DCH is requested by the device, the battery 23 cannot be controlled to be discharged.
(5) The charge-discharge request DS is a reservation request. The rule-evaluating portion 30B evaluates the charge-discharge requests DS acquired from the acquisition portion 30A during the period the battery 23 is not being charged or discharged. Even if the user of the vehicle 20 is not simultaneously operating multiple devices, a plurality of charge-discharge requests DS may be input to the control device 30 as the reservation requests. Thus, advantage (1) is achieved.

### Modifications

The above embodiments may be modified as described below. The above embodiments and the following modifications may be combined as long as there is technical consistency.

The specifying manner of the vehicle mode MD by the mode specifying portion 30D is not limited to the examples of the above embodiment. For example, the mode specifying portion 30D may determine the vehicle mode MD according to the driving condition of the vehicle 20. More specifically, the fourth vehicle mode MD4 may be specified when the vehicle 20 is being driven. The third vehicle mode MD3 may be specified when the position of the vehicle 20 is located within a designated distance from the location of the charging device 60. The vehicle modes MD are not limited to the examples of the above embodiments.

The control device 30 does not need to store each evaluating rule RL associated with each vehicle mode MD. The vehicle modes MD do not need to include the discharge prohibition mode and the discharge permission mode. The control device 30 does not need to include the mode specifying portion 30D. The control device 30 may store only one evaluating rule RL regardless of the vehicle mode MD. In this case, the rule-evaluating portion 30B may evaluate the charge-discharge request DS in accordance with the single evaluating rule RL.

The rule-evaluating portion 30B does not need to evaluate the charge-discharge requests DS in response to the evaluating rules RL. The rule-evaluating portion 30B may evaluate the charge-discharge requests DS based on the originating devices.

The rule-evaluating portion 30B does not need to generate the control request DC that changes the discharge request DCH included in the charge-discharge request DS to the no-charge-discharge request NC, which does not request charging and does not request discharging of the battery 23. Thus, the rule-evaluating portion 30B may conduct an evaluation by selecting only one of the charge-discharge requests DS. For example, the rule-evaluating portion 30B may select two of the charge-discharge requests DS and then select from the two charge-discharge requests DS, the charge-discharge request DS that starts the charging control at an earlier time t.

For the devices from which the charge-discharge request DS originated, the evaluating rule RL does not need to indicate one or more devices that cannot be selected. For example, for the devices from which the charge-discharge request DS originated, the evaluating rule RL may indicate one or more devices that are given selection priority.

Each charge-discharge request DS and each control request DC are not limited to the combinations of the charge request CH, the discharge request DCH, and the no-charge-discharge request NC. For example, each charge-discharge request DS and each control request DC may be a charge request CH that is irrelevant to a time period.

For example, each charge-discharge request DS and each control request DC may also request the amount of electric energy for charging the battery 23. More specifically, the charge-discharge request DS may be a reservation for starting charging at time t1 with the specified amount of electric energy.

When the rule-evaluating portion 30B acquires the charge-discharge requests DS that include charge requests CH specifying different amounts of electric energy, the rule-evaluating portion 30B may select the charge-discharge request DS that includes the charge request CH specifying a large amount of electric energy as the control request DC, which is the evaluation result.

The charge-discharge request DS does not need to be a reservation request. In this case, the rule-evaluating portion 30B does not need to evaluate the charge-discharge request DS acquired from the acquisition portion 30A during the period the battery 23 is not being charged or discharged. For example, the rule-evaluating portion 30B may evaluate the charge-discharge requests DS that the rule-evaluating portion 30B acquired during the predetermined period. For example, the predetermined period may be one minute.

In the above embodiment, the control device 30 may include the CPU 31 which is processing circuitry that includes one or more processors executing various processes in accordance with a computer program (software). Further, the control device 30 may include processing circuitry that includes one or more dedicated hardware circuits such as an application-specific integrated circuit (ASICs), that executes at least some of the various processes. The control device 30 may include circuitry that includes a combination of one or more processors and one or more dedicated hardware circuits. The processor includes a CPU and memories such as a RAM and a ROM. The memory stores program codes and instructions configured to have the CPU to execute a process. The memory, which is a non-transitory computer-readable medium, includes any medium that can be accessed by a general-purpose computer or special-purpose computer.

The devices are not limited to the examples of the above embodiments. For example, the devices do not need to include all of the devices described in the above embodiments. For example, the devices may include a tool for a maintenance facility of the vehicle 20.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A control device (30) configured to control a battery (23) installed in a vehicle (20), the control device (30) comprising:
an acquisition portion (30A);
a rule-evaluating portion (30B); and
an output portion (30C), wherein
the acquisition portion (30A) is configured to acquire charge-discharge requests (DS) for the battery (23) from two or more devices among a plurality of devices,
the rule-evaluating portion (30B) is configured to evaluate the charge-discharge requests (DS) acquired by the acquisition portion (30A) based on the devices from which the charge-discharge requests (DS) originated, and
the output portion (30C) is configured to output a control signal (MS) in response to a control request (DC), in which the control signal (MS) controls the battery (23), and the control request (DC) indicates a result of the evaluation conducted by the rule-evaluating portion (30B).

2. The control device (30) according to claim 1, further comprises:
evaluating rules (RL) that are respectively associated with vehicle modes (MD) and are stored in the control device (30); and
a mode specifying portion (30D) configured to specify one of the vehicle modes (MD),
wherein the rule-evaluating portion (30B) is configured to conduct an evaluation by selecting one of the charge-discharge requests (DS) in accordance with the evaluating rule (RL) associated with the one of the vehicle modes (MD) specified by the mode specifying portion (30D).

3. The control device (30) according to claim 2, wherein each of the evaluating rules (RL) indicates one or more of the devices prohibited from being selected as the device from which the charge-discharge requests (DS) originated.

4. The control device (30) according to claim 2 or 3, wherein
each of the vehicle modes (MD) includes a discharge prohibition mode and a discharge permission mode,
an evaluating rule (RL) associated with the discharge prohibition mode prohibits control for performing discharging,
an evaluating rule (RL) associated with the discharge permission mode permits the control for performing discharging, and
when the one of the charge-discharge requests (DS) selected in accordance with the evaluating rule (RL) associated with the discharge prohibition mode includes a discharge request (DCH), the rule-evaluating portion (30B) is configured to generate a control request (DC) that changes the discharge request (DCH) included in the selected one of the charge-discharge requests (DS) to a request for not performing charging nor discharging (NC).

5. The control device (30) according to any one of claims 2 to 4, wherein
each of the charge-discharge requests (DS) is a reservation request for starting charge-discharge control at a predetermined time, and
the rule-evaluating portion (30B) is configured to evaluate the charge-discharge requests (DS) acquired by the acquisition portion (30A) during a period in which the battery (23) is neither charged or discharged.
